**Europäisches Patentamt**

**European Patent Office**

**Office européen des brevets**

(19)

(11) **EP 1 607 193 A2**

(12) **EUROPÄISCHE PATENTANMELDUNG**

(43) Veröffentlichungstag:
**21.12.2005 Patentblatt 2005/51**

(51) Int Cl.⁷: **B25J 9/16**

(21) Anmeldenummer: **05010720.0**

(22) Anmeldetag: **18.05.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **15.06.2004 DE 102004028557**

(71) Anmelder: **ABB PATENT GmbH**
**68526 Ladenburg (DE)**

(72) Erfinder:
• **Bader, Axel, Dipl.-Ing. (FH)**
**61169 Friedberg (DE)**

• **Hansen, Sven**
**61200 Berstadt (DE)**
• **Schmidt, Steffen**
**73434 Aalen (DE)**
• **Henrich, Kim, Dipl.-Ing. (FH)**
**63683 Gelnhaar (DE)**

(74) Vertreter: **Miller, Toivo**
**ABB Patent GmbH**
**Postfach 1140**
**68520 Ladenburg (DE)**

(54) **Verfahren und System zur Zustandsbewertung von wenigstens einem Achsgelenk**

(57)   Die Erfindung betrifft ein Verfahren zur Zustandsbewertung von wenigstens einem Achsgelenk (2) eines Industrieroboters, wobei auf der Grundlage von Daten eines vorhandenen mechanischen Spieles an dem wenigstens einen Achsgelenk (2) des Industrieroboters ein Verschleißzustand des wenigstens einen Achsgelenkes (2) ermittelt wird. Auf der Grundlage von Daten eines Drehmomentenverlaufes wird an dem wenigstens einem Achsgelenk (2) während wenigstens eines ersten Arbeitszyklus des Industrieroboters ein erster Belastungszustand des wenigstens einen Achsgelenks (2) ermittelt, wobei auf der Basis von Daten eines Bewegungsablaufes an dem wenigstens einen Achsgelenk (2) während wenigstens eines zweiten Arbeitszyklus des Industrieroboters ein zweiter Belastungszustand des wenigstens einen Achsgelenks (2) ermittelt wird, und wobei die Bewertung des Zustandes durch Vorbewertung des Verschleißzustandes, des ersten und des zweiten Belastungszustandes und anschließendem Vergleich mit einer empirisch gewonnenen Vergleichswertematrix durchgeführt wird. Zudem betrifft die Erfindung eine System zur Zustandsbewertung von wenigstens einem Achsgelenk eines Industrieroboters.

Fig. 1

EP 1 607 193 A2

## Beschreibung

Die Erfindung betrifft ein Verfahren und ein System zur Zustandsbewertung von wenigstens einem Achsgelenk eines Industrieroboters.

Allgemein bekannt ist, dass bei Industrierobotern die Achsgelenke eines Roboterarms von Zeit zu Zeit auf ihrem Verschleiß hin kontrolliert werden. Üblicherweise erfolgt das bei bestimmten Wartungsarbeiten in festgelegten Wartungsintervallen, wobei das Servicepersonal lediglich feststellt, ob innerhalb einer Wartungsmaßnahme bestimmte Servicearbeiten an den Achsgelenken vorgenommen werden müssen, oder ob die Achsgelenke voraussichtlich noch bis zum nächsten Serviceintervall ohne Wartung auskommen. Auf der anderen Seite werden aber auch routinemäßige Wartungsarbeiten am Achsgelenk durchgeführt, beispielsweise das turnusmäßige Wechseln von Getriebeöl.

Der zeitliche Abstand zwischen zwei Wartungszeitpunkten definiert sich in der Regel aufgrund einer bestimmten Betriebsstundenzahl für den Roboter. Eine individuelle Betrachtung der tatsächlichen Aufgaben oder geleisteten Arbeiten des Industrieroboters findet nicht statt.

Ausgehend von diesem Stand der Technik ist es Aufgabe der Erfindung, ein Verfahren und ein System zur Zustandsbewertung von wenigstens einem Achsgelenk eines Industrieroboters anzugeben, bei dem die tatsächlich geleisteten Arbeiten des Industrieroboters berücksichtigt werden.

Diese Aufgabe wird gelöst durch das erfindungsgemäße Verfahren zur Zustandsbewertung von wenigstens einem Achsgelenk eines Industrieroboters mit den in Anspruch 1 angegebenen Merkmalen. Zudem wird die Aufgabe gelöst durch das erfindungsgemäße System zur Zustandsbewertung von wenigstens einem Achsgelenk eines Industrieroboters mit den in Anspruch 9 angegebenen Merkmalen.

Demgemäss weist das erfindungsgemäße Verfahren zur Zustandsbewertung von wenigstens einem Achsgelenk eines Industrieroboters die folgenden Verfahrensschritte auf. Auf der Grundlage von Daten eines vorhandenen mechanischen Spiels an dem wenigstens einen Achsgelenk des Industrieroboters wird ein Verschleißzustand des wenigstens einen Achsgelenks ermittelt. Auf der Grundlage von Daten eines Drehmomentenverlaufs an dem wenigstens einen Achsgelenk während wenigstens eines ersten Arbeitszyklus des Industrieroboters wird ein erster Belastungszustand des wenigstens einen Achsgelenks ermittelt. Weiterhin wird auf der Basis von Daten eines Bewegungsablaufes an dem wenigstens einen Achsgelenk während wenigstens eines zweiten Arbeitszyklus des Industrieroboters ein zweiter Belastungszustand ermittelt. Schließlich wird die Bewertung des Zustandes durch Vorbewertung des Verschleißzustandes, des ersten und des zweiten Belastungszustandes und anschließendem Vergleich mit einer empirisch gewonnenen Vergleichsmatrix durchgeführt.

Demgemäss arbeitet das erfindungsgemäße Verfahren auf Basis von real gemessenen oder ermittelten Daten des Industrieroboters während seiner Arbeitszyklen. Als Datengrundlage dient dabei das mechanische Spiel, der Drehmomentenverlauf sowie der Bewegungsablauf des Roboters. Das Ergebnis der Zustandsbewertung kann in einem einfachen Fall in der Aussage bestehen, dass das wenigstens eine Achsgelenk noch innerhalb zulässiger Parameter arbeitet oder nicht. Diese Aussage kann jedoch differenzierter angegeben werden, beispielsweise bis zur Angabe von Zeiträumen, innerhalb der sich das Achsgelenk beispielsweise noch ohne Wartung betrieben werden darf.

Die Daten des Drehmomentenverlaufs und des Bewegungsablaufes müssen nicht aus dem selben Arbeitszyklus stammen. Auf diese Weise ist es möglich, dass die notwendigen Daten für das erfindungsgemäße Verfahren nach und nach vom Roboter gewonnen werden. Es liegt aber auch innerhalb des Erfindungsgedankens, dass, bei einer entsprechenden Geräteausstattung, die notwendigen Daten auch parallel, also innerhalb desselben Arbeitszyklus oder derselben Arbeitszyklen, gewonnen werden.

Als Verschleißzustand wird insbesondere eine Angabe über das vorhandene mechanische Spiel verstanden, wie es am betreffenden Achsgelenk gerade vorhanden ist. Als Belastungszustand ist die Analyse der durch die Arbeiten des Roboters auf die Achsgelenke wirkenden Drehmomente sowie Bewegungserfordernisse zu verstehen.

Insgesamt wird durch das erfindungsgemäße Verfahren zur Zustandsbewertung eine Bewertungsmöglichkeit geschaffen, die sowohl den realen Verschleiß, als auch die realen Belastungen des Roboters berücksichtigen.

Eine vorteilhafte Ausgestaltung des erfindungsgemäßen Verfahren ist dadurch gekennzeichnet, dass eine Lastgebevorrichtung einen ersten, mit einem zweiten Roboterachsschenkel durch ein Achsgelenk in einer Drehrichtung beweglich miteinander verbundenen, mit dem freien Ende eines Roboterarmes verbundenen Roboterachsschenkel in einer Messlinie wechselseitig mit einer vorgebbaren Kraft beaufschlagt wird, dass ein Wegsensor die Auslenkung des ersten Roboterachsschenkels in einem vorgegebenen Abstand zur Drehachse des Achsgelenks misst, und dass ein mit dem Wegsensor verbundenes Auswertegerät unter Berücksichtigung der geometrischen Anordnungsdaten bei der Messung des Wegsensors und des Industrieroboters sowie der gemessenen Auslenkung einen Verdrehwinkel des ersten Roboterachsschenkels als Maß eines vorhandenen Spiels am Achsgelenk berechnet.

Vorstehend ist eine vorteilhafte Ausgestaltung des erfindungsgemäßen Verfahrens angegeben, mit der die Daten zur Ermittlung des Verschleißzustandes beschafft werden.

Zudem wird die Aufgabe gelöst durch das erfindungsgemäße System zur Zustandsbewertung von wenigstens einem Achsgelenk eines Roboterarmes eines Industrieroboters mit einem Datenmodul, welches die Daten eines vorhandenen mechanischen Spiels, eines Drehmomentenverlaufes sowie eines Bewegungsablaufes an wenigstens einem Achsgelenk während wenigstens eines Arbeitszyklus des Industrieroboters enthält, mit einem Analysemodul, mit welchem auf der Basis der Daten Belastungszustände und/oder Verschleißzustände ermittelbar sind, und mit einem Bewertungsmodul, durch welches eine Bewertung der ermittelten Zustände, insbesondere durch Vorbewertung des Verschleißzustandes, des ersten und des zweiten Belastungszustandes und anschließendem Vergleich mit einer empirisch gewonnenen Vergleichsmatrix, ermöglicht ist.

Das Datenmodul enthält also reale Daten des mechanischen Spiels des Drehmomentenverlaufs sowie des Bewegungsablaufes, die mit dem Analysemodul dann analysierbar sind. Auf diese Weise ist es möglich, dass ein Bewertungsmodul die analysierten Daten als Grundlage für eine Zustandsbewertung verwendet. Die getroffenen Bewertungsaussagen sind also auf Basis von realen Belastungen beziehungsweise realen Verschleißzuständen getroffen.

Im Prinzip sind mit diesem System eine Reihe von Bewertungsmöglichkeiten ermöglicht, die ein Fachmann Fallspezifisch für zweckmäßig hält. Eine günstige Bewertungsmöglichkeit besteht darin, die jeweils gefundenen Zustände, also den Verschleißzustand, den ersten sowie den zweiten Belastungszustand, mit Referenzwerten zu vergleichen. Diese Referenzwerte sind beispielsweise in einer sogenannten Vergleichswertematrix notiert, wobei deren Werte empirisch gefunden wurden. Die Vergleichswertematrix enthält dabei beispielsweise einen gemeinsamen Wert, der zum Vergleich mit einem gemeinsamen Zustandswert aller drei Zustände zu vergleichen ist, oder drei verschiedene Wertegruppen, die jeweils die Vergleichswerte zu einem Zustand, also dem Verschleißzustand, dem ersten oder dem zweiten Belastungszustand, zugeordnet sind. Bei der letztgenannten Variante ist es möglich, je nach festgestellter Kombination der drei Ergebnisse der Einzelzustände die Schlussfolgerungen über die Art zu ziehen, wie ein detektierter Verschleiß zustande gekommen ist beziehungsweise Empfehlungen darüber zu generieren, wie ein derartiger, möglicherweise überraschend hoher Verschleiß in Zukunft vermieden werden kann. Dies wird dadurch erreicht, dass beispielsweise bei einem überdurchschnittlichen Bewegungsanteil eines bestimmten Achsgelenks alternative Bewegungsbahnen des Roboterarms, die jedoch den gleichen Arbeitszweck innerhalb des Arbeitszyklus des Industrieroboters darstellen, vorgeschlagen werden.

In einer vorteilhaft kompakten Ausgestaltung des erfindungsgemäßen Systems sind das Datenmodul, das Analysemodul und das Bewertungsmodul in der Robotersteuerung angeordnet. Darüber hinaus ist es auch möglich, die einzelnen Module auf verschiedene Geräte zu verteilen. Dabei bietet sich zum Beispiel ein Auswertegerät in Form eines Messcomputers an, oder vorhandene Auswertegeräte innerhalb eines leittechnischen Netzwerks, wie sie häufig zur Gesamtsteuerung von Roboteranlagen verwendet werden.

Weitere vorteilhafte Ausgestaltungen des Erfindungsgegenstandes sind den weiteren abhängigen Ansprüchen zu entnehmen.

Anhand den in den Zeichnungen angegebenen Ausführungsbeispielen sollen die Erfindung, ihre Vorteile sowie weitere Verbesserungen der Erfindung näher erläutert und beschrieben werden.

Es zeigen:

Fig. 1    eine Übersicht über das erfindungsgemäße Verfahren,
Fig. 2    eine erste erfindungsgemäße Messanordnung zur Getriebe- und Lagerspielmessung,
Fig. 3    eine zweite erfindungsgemäße Messanordnung zur Getriebe- und Lagerspielmessung,
Fig. 4    eine Skizze des Messprinzips einer Messanordnung,
Fig. 5    einen erfindungsgemäßen Systemaufbau,
Fig. 6    ein Beispiel einer erfindungsgemäßen Patentstruktur und
Fig. 7    ein Beispiel für erfindungsgemäße Bewertung eines Bewegungsablaufes.

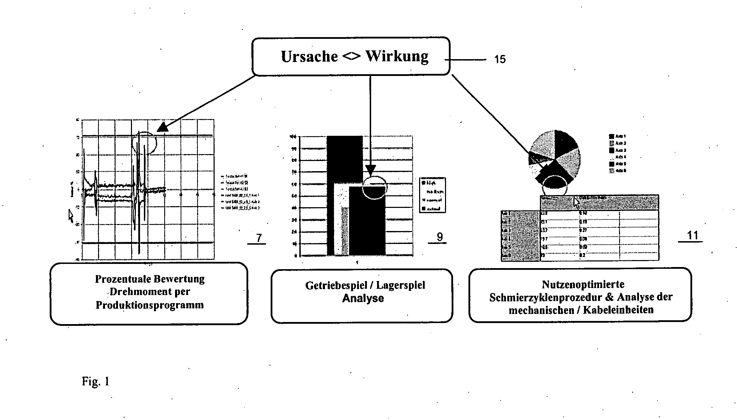

Fig. 1 zeigt eine Übersicht 5 über das erfindungsgemäße Verfahren zur Zustandsbewertung von Achsgelenken an Robotern. Dabei werden drei wesentliche Arbeitsschritte des erfindungsgemäßen Verfahrens, welche die Einzelzustände ermitteln, in einer ersten Graphik 7 für die Ermittlung eines ersten Belastungszustandes, einer zweiten Graphik 9 für die Ermittlung eines Verschleißzustandes sowie einer dritten Graphik 11 für die Ermittlung eines zweiten Belastungszustandes, dargestellt. Zur Symbolisierung eines weiteren Verfahrensschritts 13 des erfindungsgemäßen Verfahrens ist schematisch ein umrauchtes Textfeld gezeigt, das mittels der Pfeile 15 andeutet, dass in diesem Verfahrensschritt auf bestimmte Daten beziehungsweise ermittelten Zustandswerte zugegriffen wird, und zur Bewertung des Zustandes von dem wenigstens einen Achsgelenk herangezogen werden.

Die einzelnen Graphiken 7, 9, 11 sind wie folgt zu erläutern:

Die Graphik 7 zeigt die Darstellung von Drehmomentverläufen von drei unterschiedlichen Roboterachsen. Dabei sind ein erster, ein zweiter sowie ein dritter Drehmomentenverlauf auf einer Zeitachse, die den zeitlichen Verlauf der Drehmomentensignale in Sekunden angibt, dargestellt. Die Ordinatenachse des Graphs ist als Drehmomentenachse, normiert auf einen Maximalwert, der einer Prozentbelastung von 100% entspricht, derart aufgetragen, dass die unterschiedlichen Achsen des Roboters auch vergleichbar in einem Graph dargestellt werden können. Üblicherweise sind die unterschiedlichen Achsen des Roboters nach ihrer Bauart, ihrem Antrieb, ihrer Leistung, ihrem Getriebe und so weiter völlig unterschiedlich konzipiert, so dass ein Auftrag in absoluten Werten zwar möglich, aber sehr unübersichtlich wäre und jedenfalls zu einer ungünstigen Darstellung führen würde. In den Graphen sind noch ein oberer Grenzwert sowie ein unterer Grenzwert eingetragen, wobei die Grenzwerte, jeweils bei etwa 30%, also einerseits plus 30% andererseits minus 30%, ein Drehmomentenband beschreiben, welches auch als Normalband bezeichnet, wird. Kein besonderer Verschleiß an den Roboterachsen ist also zu erwarten, wenn der Drehmomentenverlauf innerhalb des beschriebenen Bandes verbleibt.

Für zwei der drei Drehmomentenverläufe ist dies auch durchgehend der Fall. Der erste Drehmomentenverlauf weist jedoch eine erste Stelle sowie eine zweite Stelle auf, an denen das Band verlassen wird. Für die Verschleißabschätzung von Achsen sind diese Stellen besonders interessant. Die Bewertung eines aktuellen Achsverschleißes kann dabei anhand von verschiedenen Kriterien vorgenommen werden.

Eine Möglichkeit besteht dabei darin, dass die Anzahl derjenigen Stellen, wie die Stellen, gezählt werden, die das Normalband verlassen. Die auftretende Häufigkeit dieser Ereignisse ist dabei ein Maß für den Verschleiß der betreffenden Achse.

Eine weitere Möglichkeit besteht darin, dass das auftretende maximale Drehmoment zu einem aktuellen Drehmoment unter Einbindung von achsspezifischen Parametern, also empirischen Größen als Bewertungsmaßstab herangezogen wird. Dabei ist als aktuelles Drehmoment insbesondere ein Mittelwert aus Drehmomentwerten anzusehen, der als arithmetischer Mittelwert über den gesamten Messzeitraum des Arbeitszyklusses angesehen werden kann, oder ein selektiver Mittelwert, der sich aus der Ruhebelastung, also einer Belastung der Roboterachse im Grundzustand des Roboters ohne Arbeitsaufgabe, ergibt.

Eine weitere Möglichkeit der Bewertung besteht darin, die Anzahl der gegenläufigen Maximalwerte beim Anfahren einer Koordinate innerhalb eines Arbeitszyklus als Bewertungsmaßstab für die Verschleißabschätzung heranzuziehen. Noch eine Möglichkeit besteht darin, einen Trendvergleich der Werte der Reibung einer Krafteinheit, also insbesondere Motor, Getriebe und Roboterarm, innerhalb einer Bewegung von einer Koordinate innerhalb des Arbeitszyklus des Roboters zu einer zweiten Koordinate, zu betrachten. Hierfür sind jedoch noch weitere, hier nicht näher beschriebene Werte und Daten aus der Robotersteuerung mit zu betrachten. Die.einzelnen zu betrachtenden Werte sind dem Fachmann jedoch geläufig.

Die Graphik 9 zeigt das Beispiel einer bewerteten Achsspielmessung anhand einer Auswertegrafik.

Bewertete Achsspielmessung heißt, dass direkte oder gefilterte, also in irgendeiner Form selektiert oder aufbereitete Messwerte zusätzlich mit einem besonderen Faktor gewichtet werden.

So auch in diesem Beispiel. Hierbei wurde auf der Koordinatenachse das Messspiel auf eine Prozentzahl zwischen 0 und 100% normiert, wobei ein 0%-Wert einem Spiel von 0 mm und die 100% einem Maximalspiel entsprechen, das im Prinzip willkürlich vorgegeben werden kann. So entspricht eine erste Säule, einem Maximalspiel bei 100%. Dabei kann zum Beispiel ein Wert festgelegt werden, bei dem erfahrungsgemäß eine Grenze erreicht worden ist, bei dem ein tatsächlich vorhandener Verschleiß den Betrieb des Roboters einschränkt oder gar stört. In der Figur ist dies durch eine zweite Säule, die eine Höhe von 60% aufweist, dargestellt. Ein tatsächlich gemessenes Achsspiel sowie dessen Bewertung wird durch eine dritte Säule dargestellt, die in etwa bei 40% liegt. Zudem ist noch eine vierte Säule gezeigt, die ein bereits vorhandenes erstes Spiel bei einem neuen Roboter darstellt.

Die Bewertung einer Achsspielmessung hat besondere Vorteile. Zum einen hat ein tatsächlich gemessener absoluter Verschleißwert den Nachteil, dass der absolute Wert allein wenig Aussagekraft hat, denn zur Aussage, ob der gemessene Wert innerhalb von erlaubten Grenzen ist, müssen auch die Minimum- und Maximumwerte für den Verschleißbereich bekannt sein. Diese wiederum sind individuell von der jeweiligen Achse am Roboter sowie von der Bauart und der Belastung und so weiter abhängig. Auf diese Weise müsste das Bedienpersonal eine Vielzahl von Werten kennen, um sich anhand der absoluten Messwerte ein umfassendes Bild über den Verschleißzustand des Roboters mit einer Vielzahl unterschiedlicher Achsen zu erarbeiten.

Zudem ist es möglich, bei einer bewerteten Betrachtung einer Spielmessung in den Bewertungsfaktor empirische Erkenntnisse, die insbesondere dem Servicepersonal des Roboterherstellers vorliegen, einfließen zu lassen, um so weitere Randbedingungen des Einsatzes des Roboters, beispielsweise die Art der Aufgabe, die der Roboter zu bearbeiten hat, oder den programmierten Bewegungsablauf den der Roboter bei seiner Arbeit zurücklegt, zu berücksichtigen. Auf diese Weise nimmt der Bewertungsfaktor nochmals Einfluss auf das Ergebnis, ob die betreffende absolute Spielmessung bereits einen unzulässigen Verschleiß darstellt oder noch toleriert werden kann. Ein weiterer Vorteil besteht darin, dass die Verschleißgrenzen, also die minimalen und maximalen Werte innerhalb derer sich ein gemessener Verschleiß idealer Weise befindet, bei einer prozentualen Angabe der bewerteten Spielmessung, immer auf die gleiche %-Grenze festlegen lässt und so einer benutzerfreundlichen Bedienung entgegenkommt.

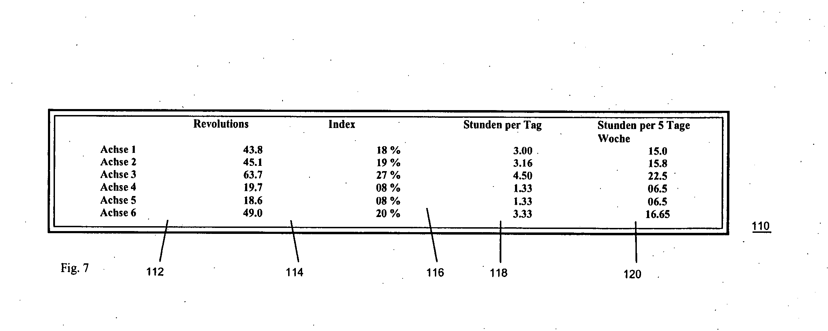

Die Graphik 11 zeigt anhand des Zahlenbeispiels eine graphische Aufbereitung der Daten gemäß der Tabelle 110 gemäß Fig. 7. Hierzu ist in dieser Figur eine zweite Tabelle gezeigt, deren erste Tabellenspalte die gleichen Angaben wie die erste Spalte enthält. Entsprechendes gilt für die zweite Tabellenspalte und die dritte Tabellenspalte, wobei deren Inhalt denen der zweiten Spalte sowie der dritten Spalte entspricht. Oberhalb der z weiten Tabelle ist der Inhalt dieser Tabelle in einer kuchenförmigen Grafik aufbereitet und mit einem Index versehen, der die beispielsweise farbig dargestellten Segmente der Kuchengrafik mit einem Achsennamen kennzeichnet.

Nachdem der erste Belastungszustand auf der Grundlage von Daten des Drehmomentenverlaufs, wie in der ersten Graphik 7 näher erläutert, der Verschleißzustand auf der Grundlage von dem vorhandenen mechanischen Spiel, wie in der zweiten Graphik 9, sowie der zweite Belastungszustand auf der Grundlage des Bewegungsablaufes, wie in der dritten Graphik 11 erläutert, ermittelt wurde, ist es nun möglich, die Bewertung des Zustandes des wenigstens einen Achsgelenks durchzuführen. Dazu werden zunächst die einzelnen Zustände vorbewertet. In einer einfachen Ausgestaltung des erfindungsgemäßen Verfahrens bedeutet das, dass der Verschleißzustand, der erste und der zweite Belastungszustand jeweils mit individuellen Gewichtungsfaktoren versehen werden, so dass die ermittelten Zustände in einer bestimmten Relation zueinander stehen.

Im gewählten Beispiel soll auf dieser Grundlage eine gemeinsame Bewertung aller Zustände durchgeführt werden, so dass mittels einer mathematischen Summenbildung der vorbewerteten Einzelzustände ein Wert für den bewerteten Gesamtzustand gefunden wird. Dieser gemeinsame Wert wird nun mit einer Vergleichswertematrix verglichen, die empirisch für diesen speziellen Robotertyp und für das jeweilige Achsgelenk empirisch ermittelt wurde. Das Ergebnis des Vergleichs ist eine qualitative oder quantitative Aussage über den Zustand des betreffenden Achsgelenks.

Eine einfache Aussage über den Zustand eines Achsgelenks wäre zum Beispiel, dass bestimmte Wartungsarbeiten durchgeführt werden müssen. Eine weitere Möglichkeit besteht darin, dass als Ergebnis des Vergleichs eine Empfehlung ausgesprochen wird, nach wie vielen weiteren Betriebsstunden Wartungsarbeiten und gegebenenfalls welche, durchzuführen sind. Noch eine Möglichkeit besteht darin, dass eine Empfehlung darüber ausgegeben wird, wie das Bewegungsprogramm des Roboters abgeändert werden müsste, um die Belastung bestimmter Achsgelenke, insbesondere derer, die besonders häufig bewegt oder sonstiegen besonderen Belastungen ausgesetzt sind, verändert werden müsste, um andere Achsgelenke, die weniger belastet sind, stärker zu belasten, um so insgesamt eine ausgeglichenere, gleichmäßiger verteilte Belastung aller Achsgelenke zu erreichen.

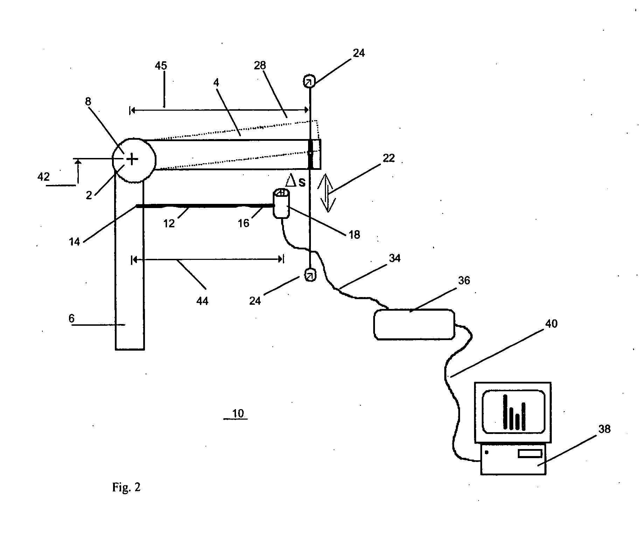

Fig. 2 zeigt als Beispiel einer ersten Messanordnung 10 zur Getriebespielmessung an einem mehrachsigen Roboter. Hierzu ist schematisch ein Achsgelenk 2 gezeigt, welches einen ersten 4 und einen zweiten Roboterachsschenkel 6 drehbeweglich um eine andere Achse 8 verbindet. Dabei soll im gewählten Beispiel der erste Roboterachsschenkel 4 das freie Ende des Roboterarmes darstellen, während der zweite Roboterachsschenkel 6 mittels weiterer Achsgelenke und weitere Roboterachsschenkel, die doch hier nicht dargestellt sind, mit dem Roboterfuß verbunden sind, der wiederum fest mit einem Fundament verbunden ist.

Ein Haltestab 12 ist mit seinem ersten Ende 14 am zweiten Roboterachsschenkel R6 festverbunden. Die Verbindungsstelle ist von der Drehachse 8 mit einem bestimmten Abstand angebracht. An einem zweiten Ende ist ein Wegsensor 18 angeordnet und so ausgerichtet, dass die Wegmessung genau in der Bildeben verläuft und zudem, wie in diesem Bild dargestellt, genau senkrecht zur Längsausrichtung des ersten Roboterachsschenkel 4 in seiner Ausgangstellung für die Niedrigspielmessung. Im gewählten Beispiel bilden der ersten 4 und zweite Roboterachsschenkel 6 ein Rechtenwinkel zueinander. In dieser Anordnung verläuft also der Haltestab 12 genau parallel zur Ausgangslage des ersten Roboterachsschenkels 4.

Im Nahbereich des freien Endes des ersten Roboterachsschenkels 4 ist einen Verbindungsvorrichtung 20 angebracht. An der Verbindungsvorrichtung 20 greift eine in dieser Figur nicht dargestellte Lasthebevorrichtung an und bringt abwechselnd eine zuvor definierte Kraft als Last in der in Bild mit dem ersten Teilen 22 angebende Richtung ein.

Die Lasthebevorrichtung selbst ist in diese Figur nicht gezeigt, jedoch sollen symbolisch die Auswirkungen, also die aufgebrachte Kraft auf den ersten Roboterachsschenkel 4 durch die Verbindungslinien zwischen der Verbindungsvorrichtung 20 und zwei entsprechend angeordneten Eckkraftmessinstrumente 24 angedeutet sein. Im gewählten Beispiel wird die Kraft durch Zugkräfte, beispielsweise angreifende Seile, auf den ersten Roboterachsschenkel aufgebracht. Es ist jedoch auch ohne weiteres denkbar, dass durch entsprechende pneumatische oder hydraulische oder elektrohydraulische oder nur elektrische Antriebe auch als Druckkräfte oder eine Mischung aus Druck- und Zugkräften in einem Roboterachsschenkel eingebracht werden.

Durch die gewählte Art der Darstellung, ist besonders leicht erkennbar, dass die Entfernung des ein Bringungspunktes der Kraft zur Drehachse 8, hier als erster Abstand 26 bezeichnet aufgrund der erzeugten Hebelwirkung beziehungsweise des Moments auf das Achsgelenks 2, in Abhängigkeit der aufgebrachten Kraft gewählt werden muss. Die aufzubringende Kraft ist bevorzugt so gewählt, dass einerseits ein Getriebe des Achsgelenks 2, je nach Kraftrichtung, jeweils in seinen Endlagen entsprechend des vorhanden Spiels gebracht wird, andererseits eine die Messung für fälschende Verformung des ersten Roboterachsschenkels 4 vermieden wird.

Um dies anzudeuten, wurde eine Auslenkposition 28 als punktierter Umriss des ersten Roboterachsschenkels R2 in einer maximalen Auslenkposition dargestellt, in dem Fall, dass die aufgebrachte Kraft durch die Lasthebevorrichtung gerade in der mit dem zweiten Pfeil 30 angedeuteten Richtung aufgebracht wird.

Der Wegsensor 18 ist mittels einer Messleitung 34 mit einem Messwandler 36 verbunden. In dem dargestellten Beispiel hat der Messwandler mehrere Funktionen. Der Wegsensor 18 ist ein analoges Signalgeber, so dass der Messwandler 36 unter anderem die Aufgabe hat, dass analoge Signal in ein Digitales Ausgangssignal zu verwandeln und so einem Auswertegerät zur Verfügung zustellen. In diesem Beispiel ist das Ausgabegerät ein Messcomputer 38 mittels einer zweiten Messleitung 40 an den Ausgang des Messwandlers 36 angeschlossen. Die zweite Messleitung kann aber bereits eine Datenverbindungsleitung sein, beispielsweise in dem Fall, dass der Messwandler 36 ebenfalls ein Messcomputer ist und die Ausgangsdaten bereit auf ein vorgeschriebenes oder sonst wie definiertes Datenprotokoll aufbereitet. Das hat den besonderen Vorteil, dass der Messwandler 36 dann universell einsetzbar ist und so verschiedene Bussysteme oder auch verschiedene Wegsensoren an den Messwandler anschließbar sind, ohne das dieses Gerät baulich verändert werden müsste. Auf der anderen Seite ist mit einer derartigen Anordnung ein sehr flexibler Aufbau der Auswertung als solches ermöglicht. Neben dem dargestellten Messcomputer 38 ist beispielsweise das Einspeisen des Ausgangssignals des Messwandlers 36 in ein Leitsystem oder in ein Messsystem möglich, dass beispielsweise auch weiter entfernt in einer Messwarte oder sogar per Datenleitung oder entsprechender Ankopplung über Telekomleitungen und Internet zu prinzipiell jedem Standpunkt weltweit übermittelbar ist.

Ausgehend von der vorstehende erfindungemäßen Messanordnung zur Getriebespielmessung an einem Achsgelenk eines Roboters soll die erfindungsgemäße Ausgestaltung der Getriebespielmessung näher erläutert werden.

Die Lastgebevorrichtung beaufschlagt den ersten Roboterachsschenkel 4 zunächst mit einer Kraft in eine der Richtungen, wie in einem der ersten Pfeile 22 angegeben. Aufgrund der Krafteinwirkung wird der erste Roboterachsschenkel 4 nun aus seiner lastfreien Position ausgelenkt und in Zugrichtung der Kraft leicht verschoben. Mittels demjenigen Kraftmesser 24, der auf Seite der angreifenden Kraft angeordnet ist, wird die Kraft ständig gemessen und die Lastgebevorrichtung in dieser Weise auf einen Maximalbetrag beschränkt, in den der Kraftmesser eine Rückmeldung an die Lastgebevorrichtung über die aktuell herrschende Belastung des ersten Roboterachsschenkels 4 meldet. Der Vorgang der Auslenkung wird von dem Wegsensor 18 streckenmäßig erfasst. Im gewählten Beispiel ist der Wegserisor ein Ultraschallsensor, der auch kleine Streckendifferenzen mit ausreichender Genauigkeit erfasst. Der Wegsensor 18 ist durch den Haltestab 12 starr mit dem zweiten Roboterachsschenkel 6 verbunden. Das erste Ende 14 ist von der Drehachse 8 mit einem ersten Abstand 42 beabstandet. Ebenso ist ein zweiter Abstand 44 durch die Länge des Haltestabs 12 vorgegeben, so dass die Position des Wegsensors 18 exakt bestimmbar ist.

Die Lastgebevorrichtung erhält die vorgegebene Last auf den ersten Roboterachsschenkel 4 nun einen Moment lang aufrecht, während die Messung ständig vorgenommen wird. Nach einer gewissen Zeit wird der erste Roboterachsschenkel wieder entlastet und die Lasthebevorrichtung bringt nun eine Kraft in genau entgegen gesetzter Richtung wie zuvor auf den ersten Roboterachsschenkel 4 auf. Die Auslenkung erfolgt somit nun in der genau entgegen gesetzten Richtung. Auch dieser Vorgang wird vom Wegsensor 18 erfasst. Wie schon zuvor, wird auch hier die tatsächlich aufgebrachte Kraft durch die zweite Kraftmessvorrichtung 24 erfasst und auf ein vorgegebenes Maximum beschränkt.

Die vom Wegsensor 18 erfassten Daten werden an den Messwandler 36 weiter gegeben, der die empfangenen analogen Signale vom Wegsensor 18 in digitale, vom Messcomputer 38 verwertbare Signale umwandelt.

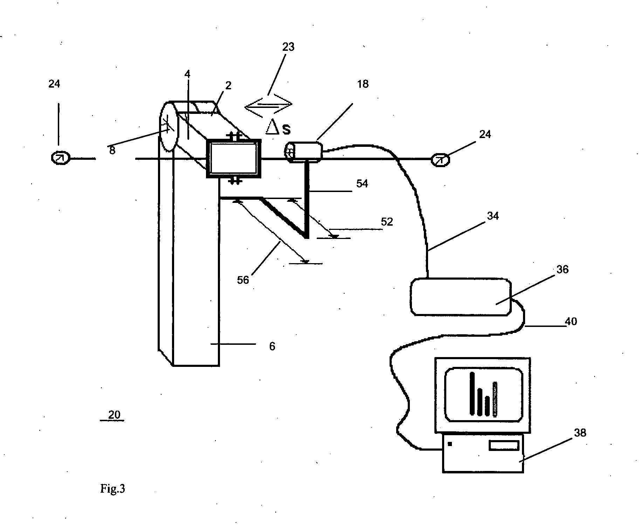

Der Messcomputer 38 berechnet nunmehr aufgrund der geometrischen Anordnungsdaten und der Messwerte des Wegsensors, also die gemessene Auslenkung in beide der Richtungen, in der der erste Roboterachsschenkel 4 belastet wurde, ein tatsächlich vorhandenes Spiel am Achsgelenk 2 aufgrund der in diesem Beispiel gewählten Belastungsrichtung ist das berechnete Spiel das Getriebespiel, also dasjenige Spiel, das in der Drehrichtung des Achsgelenks 2 vorhanden ist. Die Berücksichtigung der geometrischen Anordnungsdaten bei der Fig. 3 näher erläutert. Von Vorteil ist es jedoch bei dieser Anordnung, dass der Wegsensor 18 genau auf eine Messlinie ausgerichtet wird, die der erwarteten Auslenkungsrichtungen des Roboterachsschenkels entspricht und aufgrund der geschickten Wahl der Kraftangriffsrichtungen genau tangential zu den Drehrichtungen der Drehachse 8 des Achsgelenks 2 ausgerichtet ist. Um unnötige mögliche Fehlerquellen auszuschließen, greift auch die Lastgebevorrichtung bei ihrer wechselseitigen Beaufschlagung des ersten Roboterachsschenkels 4 jeweils ebenfalls in den beiden Richtungen der Messlinie an. Mögliche Fehler in der Ausrichtung des Wegsensors 18, also ein Winkelfehler bei der Ausrichtung bezüglich der Messlinie und der Richtung der Auslenkung des ersten Roboterachsschenkels 4 können ebenfalls vom Auswertegerät mittels der entsprechend vorgenommenen Messung der geometrischen Anordnungsdaten des Wegsensors ausgeglichen werden.

Fig. 3 zeigt eine zweite Messanordnung, die ähnlich aufgebaut ist, wie die erste Messanordnung, weshalb auch für gleichartige Bauteile die selben Bezugszeichen wie in Fig. 1 verwendet werden.

Im Unterschied zur Fig. 1 zeigt Fig. 2 jedoch eine Spielmessung des Lagerspiels am Achsgelenk, das heißt, dass die Messrichtungen entlang der Messlinie des Wegsensors genau parallel zur Drehachse des Achsgelenks verläuft, und zwar genau in einem dritten Abstand, wobei dieser dem lichten Abstand zwischen dem Wegsensor und der Drehachse entspricht.

Der Wegsensor in dieser Figur wird durch einen zweiten Haltestab in Position gehalten, dessen eines Ende wiederum am zweiten Roboterachsschenkel angebracht ist und dessen zweites Ende mit dem Sensor verbunden ist, wobei im Unterschied zur Figur 1 der zweite Haltestab durch zwei räumliche Richtungsänderungen die gewünschte Positionierung des Wegsensors in allen drei Raumrichtungen ermöglicht. Dabei kann durch ein erstes Teilstück des zweiten Haltestabs, welches mit dem zweiten Roboterachsschenkel verbunden ist, der Abstand des Wegsensors zum ersten Roboterachsschenkel nämlich in Richtung der Drehachse, eingestellt werden. Mittels einem zweiten Teilstück, welches als Länge den dritten Abstand aufweist, wird der lichte Abstand zwischen dem Wegsensor und der Drehachse eingestellt. Schließlich ist mit einem dritten Teilstück des zweiten Haltestabs, welches an seinem freien Ende den Wegsensor trägt, die noch verbleibende dritte Raumrichtung einstellbar, so dass der Wegsensor mit einem bestimmten Abstand zum ersten Roboterachsschenkel dessen Auslenkung, diesmal jedoch paralleler Richtung zur Drehachse des Achsgelenks, ausgerichtet ist.

Dementsprechend greift die Lastgebevorrichtung, wiederum in dieser Figur nicht dargestellt, entlang einer parallelen Linie zur Drehachse an dem ersten Roboterachsgelenk an, wobei sich das durch die Lastgebevorrichtung aufgebrachte Moment in jeder Richtung, in der belastet wird, neben der aufgebrachten maximalen Kraft F noch durch den vierten Abstand bestimmt, dessen Größe durch den lichten Abstand zwischen der Verbindungsvorrichtung und der Drehachse bestimmt ist.

Der Angriffspunkt der Lastgebevorrichtung für das Einbringen der wechselseitig aufgebrachten Kraft, die Verbindungsvorrichtung ist hier ausgeführt als Schelle, die den ersten Roboterachsschenkel kraftschlüssig umschließt und über welche die Lastgebevorrichtung Kräfte zur Hin- und Herbewegung des ersten Roboterachsschenkels, gezeigt durch die zweiten Pfeile, in diesen einleitet.

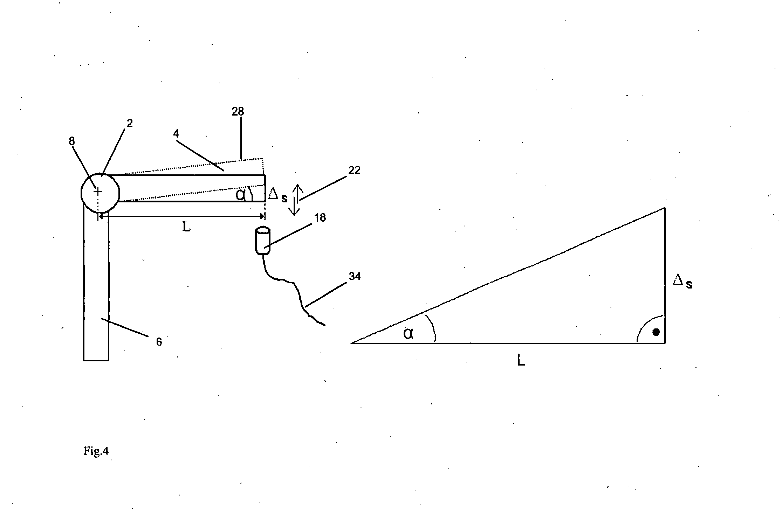

Figur 4 zeigt Bezug zu Figur 2 und stellt die entsprechende Situation für eine Getriebespielmessung am Achsgelenk 2 in der linken Bildhälfte dar. Daher sind für die vergleichbaren Bauteile auch die selben Bezugszeichen wie in Figur 1 verwendet worden. Gezeigt ist wieder der erste Roboterachsschenkel 4 in seiner, in diesem Bild horizontalen, unbelasteten Ausgangsstellung sowie in der oberen Auslenkposition 28.

Dabei ist der Wegsensor 18 in einer Distanz L von der Drehachse 8 entfernt. Der erste Roboterachsschenkel 4 wird zudem um einen Winkel α durch die Krafteinrichtung der Lastgebevorrichtung in die Auslenkposition 28 verbracht. Eine dabei zurückgelegte Wegstrecke ΔS, entlang der Messlinie des Wegsensors 18 gesehen, entspricht in etwa der vom ersten Roboterachsschenkel 4 tatsächlich zurückgelegten Strecke.

Ein kleiner Unterschied zwischen der tatsächlich zurückgelegten Wegstrecke des Roboterachsschenkels 4 und der eingezeichneten Wegstrecke ΔS besteht darin, dass der erste Roboterachsschenkel 4 durch die Drehung um die Drehachse 8 auf einen Kreisbogen gezwungen wird, was näherungsweise jedoch als rechtwinkliges Dreieck für eine Berechnung herangezogen wird. Dieses Dreieck als Berechnungsgrundlage ist in der rechten Bildhälfte nochmals als Skizze dargestellt. Dabei ist der Winkel α übertrieben dargestellt. Üblicherweise handelt es sich bei dem Winkel α um sehr kleine Winkel im Gradbereich. Demgemäss kann die Berechnung des Winkels α wie folgt dargestellt werden:

$$\alpha \text{ (in Grad)} = \arctan \Delta S/L$$

Diese Gleichung kann durch Einfügen von Korrekturfaktoren weiter verbessert werden.

Aus der Figur ist gut zu erkennen, dass der Wegsensor 18 lediglich die Wegdifferenz ΔS messen muss, um zu einer Winkelangabe zu gelangen, die allein von geometrischen Anordnungsdaten abhängig ist. Wird zudem bei der Beaufschlagung mit einer Kraft durch die Lastgebevorrichtung beachtet, dass der erste Roboterachsschenkel lediglich mit einer solchen Kraft beaufschlagt wird, dass gerade das Getriebespiel erkennbar ist, ohne dass die Verbiegung des Roboterachsschenkels 4 aufgrund der Krafteinwirkung eine nennenswerte Größe erreicht, die die Messung beeinflussen könnte, dann liefert die Messanordnung eine sehr genaue Berechnungsgrundlage für die Berechnung des Spiels.

In dem weiteren Fall der Lagerspielmessung, wie in Fig. 3 dargestellt, ist eine vergleichbare Übertragung der vom Wegsensor gemessenen Wegdifferenz ΔS auf eine Winkelzahl nicht nötig. Ein mögliches Lagerspiel am Achsgelenk 2 drückt sich nämlich in einer Parallelverschiebung des gesamten zweiten Roboterachsschenkels 4 unter der Krafteinwirkung der Lastgebevorrichtung aus.

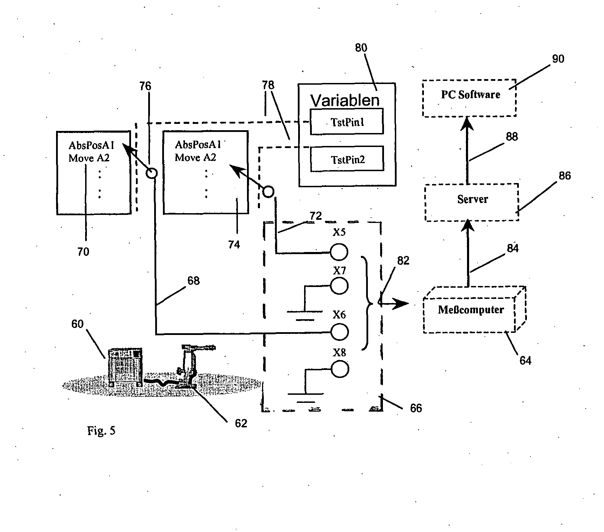

Figur 5 zeigt das Beispiel einer Anschlussmöglichkeit zwischen einer Robotersteuerung 60, der einen Roboter 62 steuert, und einem ersten System zur Verschleißabschätzung 64. Eine Schnittstelle 66 zwischen der Robotersteuerung 60 und dem ersten System 64 ist mit einem gestrichelten Rahmen umrandet und umfasst eine Anzahl von Schnittstellenpunkten, die mit X5, X6, X7 sowie X8 bezeichnet sind. Die Schnittstelle 66 ist dabei für das Abgreifen von zweier Roboterachsen vorgesehen, wobei es ohne weiteres denkbar ist, dass eine Viel-

zahl von Signalen verschiedener Achsen über die Schnittstelle abgefragt oder entnommen werden.

Im gewählten Beispiel ist die Seite der Schnittstelle 66, auf der sich der Roboter 62 sowie dessen Steuerung 60 befindet, durch die Darstellung der Symbole für einen Roboter 62 und dessen Robotersteuerung 60 dargestellt. Auf dieser Seite der Schnittstelle 66 verbindet den Anschlusspunkt X6 eine erste Datenleitung 68 mit einem ersten Datenauswahlschalter 70 der Robotersteuerung 60. In vergleichbarer Weise ist der Anschlusspunkt X5 mit einer zweiten Datenleitung 72 mit einem zweiten Datenauswahlschalter 74 verbunden. Über ein Schaltelement 76 kann die erste Datenleitung 68 entweder mit einem Signal einer absoluten Position einer ersten Roboterachse A1 oder einem Drehmomentsignal der ersten Achse A1 geschaltet werden. Im gewählten Beispiel verbindet das Schaltelement 76 die Datenleitung 68 mit der absoluten Position der ersten Achse A1.

Im Unterschied dazu, ist die zweite Datenleitung 72 mit dem Drehmomentensignal für eine zweite Achse A2 des Roboters 62 verbunden.

Das gewählte Beispiel zeigt also die Beschaltung der Schnittstelle 66 mit Daten aus der Robotersteuer 60, die lediglich eine Akte betreffen. Es ist ohne weitere denkbar, dass die Daten mehrerer oder aller Achsen des Roboters 62 auf eine entsprechende Schnittstelle aufgelegt werden. Der Vorteil dieser Beschaltung ist es, dass im Vergleich zur absoluten Position der Achse, die die Stellung im aktuellen Programm, welches der Roboter 62 abzuarbeiten hat, darstellt ein entsprechender Drehmomentwert jeweils zugeordnet werden kann.

Zu Testzwecken, ob die zur Verfügung gestellten Signale auch fehlerfrei an die Schnittstelle 66 übermittelt werden, sind der erste 70 sowie der zweite Datenauswahlschalter 74 jeweils mit einer Testvorrichtung 80 mittels der dritten Datenleitungen 78 verbunden.

Die Schnittstelle 66 ist außerdem noch mit dem Messcomputer 64 verbunden, dass durch einen ersten Pfeil 82 angedeutet ist. Zudem ist der Messcomputer durch eine vierte Datenleitung 84 mit einem Server 86 sowie dieser mit einer fünften Datenleitung 88 mit einem PC 90 verbunden. Im dargestellten Beispiel hat der Messcomputer die Aufgabe die an der Schnittstelle analog zur Verfügung gestellten Werte der Roboterakte als Werte für einen Drehmomentenverlauf zu interpretieren. Die durch den Messcomputer 64 aufbereiteten Werte für den Drehmomentenverlauf werden durch die vierte Datenleitung 84, den Surfer 86 sowie die fünfte Datenleitung 88 zum PC 90 übermittelt.

Mit der in dieser Figur dargestellten Anordnung läuft das erfindungsgemäße Verfahren wie folgt ab. Von der Robotersteuerung 60 werden am Anschlusspunkt X6 über die erste Datenleitung 68 Datensignale zur Verfügung gestellt, die als absolute Position der ersten Akte A1 zu bewerten sind. In vergleichbarer Weise werden von der Robotersteuerung 60 über die zweite Datenleitung 72 ein Wert für das gerade aufgebrachte Drehmoment an der ersten Achse des Roboters 62 angelegt ist. Beide Werte werden zusammen mit einem Zeitsignal vom Messcomputer 64 erfasst und zunächst gespeichert. Der Signalwert für die absolute Position der ersten Achse des Roboters 62 ist für das erfindungsgemäße Verfahren nicht zwingend erforderlich, vereinfacht jedoch für zweckmäßige Ausgestaltung des erfindungsgemäßen Verfahrens die Interpretation der Messwerte für das Drehmoment.

Ebenso wenig ist es erforderlich, dass der Messcomputer die empfangenen Daten speichert. Diese könnten auch sofort, also online weiter verarbeitet und an den PC 90 übertragen werden. Aber auch hier ist es zweckmäßig, die erhaltenen Messwerte zu Vergleichszwecken oder für spätere Vergleichsrechnungen zunächst zu speichern, um so auch eine Kopie der Originaldaten zur Verfügung zu haben.

Auf diese Weise wird der gesamte Drehmomentenverlauf eines kompletten Arbeitszyklus des Roboters 62 an den PC übermittelt. Auch dieser speichert zunächst den empfangenen Drehmomentenverlauf der ersten Achse ab. Im gewählten Beispiel soll der Arbeitszyklus des Roboters 62 im ersten Schritt aus dem Anfahren und Greifen eines Werkstückes bestehen. Der zweite Arbeitsschritt ist das Anheben des Werkstücks mit anschließendem Verbringen desselben an eine Endposition für das Werkstück. Schließlich besteht der dritte Arbeitsschritt für den Roboter 62 darin, das Werkstück loszulassen und den Roboterarm wieder in seine Ausgangsposition zu bewegen, so dass der nunmehr beendete Arbeitszyklus wiederholt werden könnte.

Der durch die Arbeitsschnitte definierte Arbeitszyklus wird zunächst als Drehmomentenverlauf auf der Anzeigevorrichtung des PCs 90 dargestellt. Jeder Drehmomentenverlaufsabschnitt, der ein zuvor festgelegtes Drehmomentenband, also zulässige Minimum- und Maximumwerte für das Drehmomentband dieser Achse verlassen, werden als solche analysiert und in einem anschließenden Verfahrensschritt einer Bewertung unterzogen. In einem einfachen Bewertungsschritt werden dabei lediglich die Häufigkeit des Verlassens des Drehmomentenbandes innerhalb einer bestimmten Zeit, vorgegeben durch den Arbeitszyklus, als Maßstab für die Bewertung herangezogen. Eine andere Möglichkeit besteht darin, dass der Kurvenverlauf in einem analysierten Drehmomentenverlaufsabschnitt für die Bewertung herangezogen wird. Insgesamt wird aus der Häufigkeit und/oder des Kurvenverlaufs der Drehmomentenverlaufsabschnitte gegebenenfalls zusätzlich mit einem empirisch ermittelten Faktor versehen, der aktuelle Achsverschleiße aufgrund eines solchen Arbeitszyklus abgeschätzt. Die einfachste mit dem erfindungsgemäßen Verfahren abschätzbareri Achsverschleiß ist also ein Achsverschleiß je Arbeitszyklus. Mit der Kenntnis der bisher vollbrachten Arbeitszyklusse des Roboters 62 wird erfindungsgemäß dann auch den aktuellen Verschleißzustand des Roboters 62 beziehungsweise der betreffenden ersten Achse geschlossen werden. Aufgrund dieser Abschätzung wird dann zudem noch eine Aussage ermöglicht, die sich auf den Zeitraum bezieht, mit dem diese Roboterachse noch bei dem momentanen Arbeitszyklus betrieben werden kann.

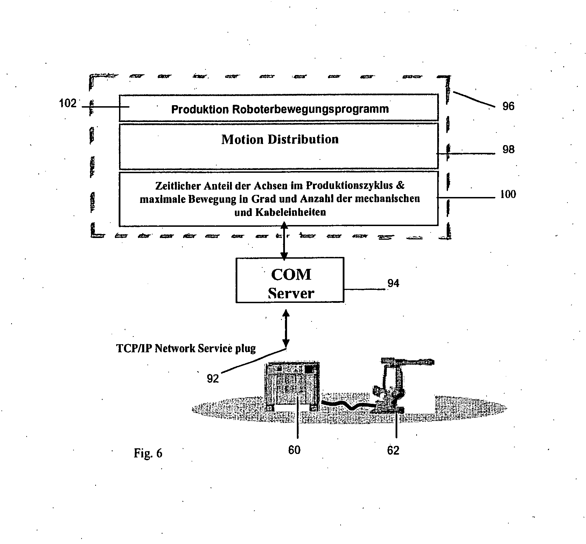

Figur 6 zeigt das Beispiel eines Datenflusses von der Robotersteuerung 60 des Roboters 62 über eine TCP/IP-Schnittstelle 92, durch welche die Daten von der Robotersteuerung 60 an ein TCP/IP-Server mit Netzwerk 94 einspeisbar sind. Ein TCP/IP-Netzwerk 94 verbindet also ein Auswertegerät 96 mit der Robotersteuerung 60. Dieses Beispiel zeigt, dass das Auswertegerät 96 ortsunabhängig von der Robotersteuerung 60 mittels des Netzwerkes 94 verbunden sein kann. Im gewählten Beispiel ist das ein TCP/IP-Netzwerk. Es ist aber ebenso gut denkbar, dass die Schnittstelle 92 in andere Netzwerke einbindet, beispielsweise dass die Schnittstelle 92 eine Internetschnittstelle ist, so dass das Netzwerk 94 durch das Internet gebildet ist, und das Auswertegerät 96 somit ohne lokale Beschränkung irgendwo auf der Welt stehen kann.

Im gewählten Beispiel ist das erfindungsgemäße System zur Verschleißabschätzung von Achsen eines Roboterarmes eines Industrieroboters mit allen seinen Modulen im Auswertegerät 96 verwirklicht. Der Drehmomentenverlauf wird demgemäss von der Schnittstelle 92 über das Netzwerk 94 in Form der der Robotersteuerung 60 zur Verfügung gestellten Daten zum Auswertegerät 96 geleitet. Dort werden die erhaltenen Daten zunächst von einem Datensammler 98 empfangen und als Drehmomentdaten oder sonstige Daten, insbesondere auch in zeitlichem Zusammenhang, festgehalten und gegebenenfalls gespeichert. Auf diese Weise ist einem Bearbeitungsmodul 100 möglich, die vom Datensammler 98 zur Verfügung gestellten Daten als Drehmomente für einen Drehmomentenvergleich, für die Maxiamlwerterkennung und für die Darstellung der Daten als Kurven, zu interpretieren. In einem weiteren Modul, einem Bewertungsmodul 102 wird die Kurve, der Kurvenverlauf oder bestimmte Aspekte der Kurve bewertet als Verschleiß, so dass am Ende des erfindungsgemäßen Verfahrens eine Aussage darüber getroffen werden kann, inwieweit eine bestimmte Achse des Roboters 62 besonderen, abnormen Belastungen oder Überschreitungen bestimmter zulässiger Belastungen ausgesetzt ist und derart ein besonderer Verschleiß zu erwarten ist. Diese Daten mit anderen Daten der Produktion, der Wartung oder des Roboterbewegungsprogramms, wie in dieser Figur im Bewegungsmodul 102 angedeutet verbessern insgesamt die Qualität der Aussage betreffend der Verschleißabschätzung beziehungsweise des Zustandes der einzelnen Akten.

Fig. 7 zeigt eine Tabelle 110, die beispielhafte Daten für einen sechsachsigen Roboter enthält, die aus einem Produktionsprogramm stammen, welches eine Zykluszeit von 60 Sekunden aufweist sowie 1000 Zyklen je 24 Stunden arbeitet. Die erste Spalte 112 bezeichnet dabei die jeweiligen Roboterachsen 1 bis 6, wobei den betreffenden Achsen zeilenweise die nachfolgenden Werte zugeordnet sind. Die Spalte 2 gibt für jede Achse einen absoluten Wert für die festgestellten Umdrehungen der jeweiligen Achse an, die innerhalb einer Zykluszeit des Produktionsprogrammes festgestellt wurden. In einer dritten Spalte sind die Umdrehungswerte als indizierte Werte, also Prozentwerte als anteilige Nutzung der jeweiligen Achsen aufgetragen, wobei die Summe aller angegebenen Prozentwerte 100% ergibt. In einer vierten Spalte 118 sind die absoluten zeitlichen Werte der jeweiligen Achse innerhalb eines Tages notiert und schließlich sind in einer fünften Spalte 120 die absoluten Zeiten der Benutzung einer Achse während einer Arbeitswoche, also einer Woche mit fünf Tagen mit einer Stundenzahl angegeben.

Mit der Tabelle 110 soll deutlich gemacht werden, dass aus den erfindungsgemäß benötigten Daten eines Bewegungsablaufes von Achsen eines Roboters zunächst die Drehbewegungen der jeweiligen Achsen festgestellt werden. Der letzte Verfahrensschritt des erfindungsgemäßen Verfahrens jedoch ist dieser Tabelle nicht entnehmbar. Aufgrund der in der dritten Spalte 116 gemachten Angabe des prozentualen Anteils an den Umdrehungen jeder Achse an einer Gesamtumdrehungszahl, ist es jedoch nunmehr auf verschiedene Arten möglich eine Bewertung der festgestellten Drehbewegungen jeder Achse vorzunehmen.

Eine Möglichkeit besteht darin, die höchst belastetet Achse, nämlich die Achse 3 im gewählten Beispiel als maßgebliche Achse festzulegen, so dass die Berechnung des Wartungsintervalls auf Grundlage der 27% Umdrehungsanteil an der Gesamtumdrehungszahl oder aufgrund der absoluten Umdrehungszahlen, nämlich hier 63,7 Umdrehungen für die Achse drei, erfolgt und auf diese Weise zusammen mit den historischen Daten also den Daten, die angeben wie viele Zyklen bereits vom Roboter geleistet wurden, im Vergleich zu der empfohlenen maximalen Umdrehungszahl gemäß der Herstellerangaben für eine nächst folgende Wartung, das Wartungsintervall als solches oder den verbleibenden Zeitraum bis zu einem nächsten Wartungszeitpunkt ermittelt werden.

Anhand des Zahlenbeispiels aus der Figur 1 eine graphische Aufbereitung der Daten gemäß der Tabelle 110. Hierzu ist in dieser Figur eine zweite Tabelle 100 gezeigt, deren erste Tabellenspalte 102 die gleichen Angaben wie die erste Spalte 112 enthält. Entsprechendes gilt für die zweite Tabellenspalte 104 und die dritte Tabellenspalte 106, wobei deren Inhalt denen der zweiten Spalte 114 sowie der dritten Spalte 116 entspricht. Oberhalb der zweiten Tabelle 100 ist die Aussage dieser Tabelle in einer kuchenförmigen Grafik 108 aufbereitet und mit einem Index 110 versehen, der die farbig dargestellten Segmente mit einem Achsennamen kennzeichnet.

Bezugszeichenliste

| | |
|---|---|
| 2 | Achsgelenk |
| 4 | erster Roboterachsschenkel |
| 5 | Übersicht |
| 6 | zweiter Roboterachsschenkel |
| 7 | erste Graphik |
| 8 | Drehachse |
| 9 | zweite Graphik |
| 10 | erste Messanordnung |
| 11 | dritte Graphik |
| 12 | erster Haltestab |
| 13 | Verfahrensschritt |
| 14 | erstes Ende |
| 15 | Pfeile |
| 16 | zweites Ende |
| 18 | Wegsensor |
| 20 | Verbindungsvorrichtung |
| 22 | erster Pfeil |
| 24 | zweiter Pfeil |
| 26 | erster Abstand |
| 28 | Auslenkposition |
| 29 | Messlinie |
| 34 | erste Messleitung |
| 36 | Messwandler |
| 38 | Messcomputer |
| 40 | zweite Messleitung |
| 42 | erster Abstand |
| 44 | zweiter Abstand |
| 50 | zweite Messanordnung |
| 52 | dritter Abstand |
| 54 | zweiter Haltestab |
| 56 | vierter Abstand |
| 60 | Robotersteuerung |
| 62 | Roboter |
| 64 | erstes System |
| 66 | Schnittstelle |
| 68 | erste Datenleitung |
| 70 | erster Datenauswahlschalter |
| 72 | zweite Datenleitung |
| 74 | zweiter Datenauswahlschalter |
| 76 | Schaltelement |
| 78 | dritte Datenleitung |
| 80 | Testvorrichtung |
| 82 | erster Pfeil |
| 84 | vierte Datenleitung |
| 86 | Server |
| 88 | fünfte Datenleitung |
| 90 | Datenverarbeitungsvorrichtung |
| 92 | Schnittstelle |
| 94 | Netzwerk |
| 96 | Auswertegerät |
| 98 | Datensammler |
| 100 | Bearbeitungsmodul |
| 102 | Bewertungsmodul |
| 104 | zweite Tabellenspalte |
| 106 | dritte Tabellenspalte |
| 108 | Graphik |
| 110 | Index |
| 112 | erste Spalte |
| 114 | zweite Spalte |
| 116 | dritte Spalte |
| 118 | vierte Spalte |
| 120 | fünfte Spalte |

**Patentansprüche**

1. Verfahren zur Zustandsbewertung von wenigstens einem Achsgelenk (2) eines Industrieroboters, wobei auf der Grundlage von Daten eines vorhandenen mechanischen Spieles an dem wenigstens einen Achsgelenk (2) des Industrieroboters ein Verschleißzustand des wenigstens einen Achsgelenkes (2) ermittelt wird, wobei auf der Grundlage von Daten eines Drehmomentenverlaufes an dem wenigstens einem Achsgelenk (2) während wenigstens eines ersten Arbeitszyklus des Industrieroboters ein erster Belastungszustand des wenigstens einen Achsgelenks (2) ermittelt wird, wobei auf der Basis von Daten eines Bewegungsablaufes an dem wenigstens einen Achsgelenk (2) während wenigstens eines zweiten Arbeitszyklus des Industrieroboters ein zweiter Belastungszustand des wenigstens einen Achsgelenks (2) ermittelt wird, und wobei die Bewertung des Zustandes durch Vorbewertung des Verschleißzustandes, des ersten und des zweiten Belastungszustandes und anschließendem Vergleich mit einer empirisch gewonnenen Vergleichswertematrix durchgeführt wird.

2. Verfahren nach Anspruch 1, **dadurch gekennzeichnet, dass** die Daten zur Ermittlung des Verschleißzustandes durch eine Spielmessung ermittelt werden.

3. Verfahren nach Anspruch 1 oder 2, **dadurch gekennzeichnet, dass** eine Lastgebevorrichtung einen ersten, mit einem zweiter Roboterachsschenkel (6) durch ein Achsgelenk (2) in einer Drehrichtung beweglich miteinander verbundenen, mit dem freien Ende (14, 16) eines Roboterarmes verbundenen Roboterachsschenkel (4, 6) in einer Messlinie (29) wechselseitig mit einer vorgebbaren Kraft beaufschlagt wird, dass ein Wegsensor (18) die Auslenkung des ersten Roboterachsschenkels (4) in einem vorgegebenen Abstand (26; 42, 44, 52, 56) zur Drehachse (8) des Achsgelenks (2) misst, und dass ein mit dem Wegsensor (18) verbundenes Auswertegerät (96) unter Berücksichtigung der geometrischen Anordnungsdaten bei der Messung des Wegsensors (18) und des Industrieroboters sowie der gemessenen Auslenkung einen Verdrehwinkel des ersten Roboterachsschenkels (4) als Maß eines vorhandenen Spieles am Achsgelenk (2) berechnet.

4. Verfahren nach einem der vorgenannten Ansprüche, **dadurch gekennzeichnet, dass** zur Datengewinnung für den Drehmomentenverlauf und des Bewegungsablaufes derselbe wenigstens eine Arbeitszyklus verwendet wird.

5. Verfahren nach einem der vorgenannten Ansprüche, **dadurch gekennzeichnet, dass** der Drehmomentenverlauf auf Drehmomentenverlaufsabschnitte, die ein zuvor festgelegtes Drehmomentenband verlassen, analysiert wird, und daß durch Bewertung der Häufigkeit und / oder des Kurvenverlaufs der Drehmomentenverlaufsabschnitte der erste Belastungszustand des wenigstens einen Achsgelenkes (2) ermittelt wird.

6. Verfahren nach einem der vorgenannten Ansprüche, **dadurch gekennzeichnet, dass** die Drehbewegungen des wenigstens einen Achsgelenkes (2) anhand der Daten des Drehbewegungsverlaufes festgestellt werden, und dass durch die Bewertung der festgestellten Drehbewegungen der zweite Belastungszustand für das wenigstens eine Achsgelenk (2) ermittelt wird.

7. Verfahren nach einem der vorgenannten Ansprüche, **dadurch gekennzeichnet, dass** die Vorbewertungen durch einen jeweils empirisch ermittelten Gewichtungsfaktor vorgenommen werden.

8. Verfahren nach einem der vorgenannten Ansprüche, **dadurch gekennzeichnet, dass** der Vergleich zur Bewertung des Zustandes des wenigstens einen Achsgelenks (2) durch eine Kombination von Einzelvergleichen des Verschleißzustandes, des ersten und des zweiten Belastungszustandes mit der empirisch ermittelten Kombinationen der Vergleichsmatrix oder durch einen Gesamtvergleich mit empirisch ermittelten Gesamtwerten der Vergleichsmatrix durchgeführt wird.

9. System (64) zur Zustandbewertung von wenigstens einem Achsgelenk (2) eines Roboterarmes eines Industrieroboters mit einem Datenmodul, welches die Daten eines vorhandenen mechanischen Spieles, eines Drehmomentenverlaufes sowie eines Bewegungsablaufes an wenigstens einem Achsgelenk (2) während wenigstens eines Arbeitszyklus des Industrieroboters enthält, mit einem Analysemodul, mit welchem auf der Basis der Daten Belastungszustände und / oder Verschleißzustände ermittelbar sind, und mit einem Bewertungsmodul (102), durch welches eine Bewertung der ermittelten Zustände, insbesondere durch Vorbewertung des Verschleißzustandes, des ersten und des zweiten Belastungszustandes und anschließendem Vergleich mit einer empirisch gewonnenen Vergleichswertematrix, ermöglicht ist.

10. System (64) nach Anspruch 9, **dadurch gekennzeichnet, dass** wenigstens eines der Module, nämlich das Datenmodul, das Analysemodul oder das Bewertungsmodul (102), in einer Robotersteuerung (60) angeordnet ist.

11. System (64) nach Anspruch 9 oder 10 **dadurch gekennzeichnet, dass** wenigstens eines der Module, nämlich das Datenmodul, das Analysemodul oder das Bewertungsmodul (102), in einem Auswertegerät (96) angeordnet ist, wobei das Auswertgerät gegebenenfalls mit der Robotersteuerung (60) verbunden ist.

12. System (64) nach einem der vorgenannten Ansprüche 9 bis 11, **dadurch gekennzeichnet, dass** die Werte des Drehmomentenverlaufes oder / und des Bewegungsablaufes aus der Robotersteuerung (60) als direkte oder indirekte Werte auslesbar sind.

13. System (64) nach einem der vorgenannten Ansprüche 9 bis 12, **dadurch gekennzeichnet, dass** bei einer Messanordnung (10, 50) zur Spielmessung an einem Achsgelenk (2) eines Industrieroboters ein erster und ein zweiter Roboterachsschenkel (6) durch das Achsgelenk (2) in einer Drehrichtung beweglich miteinander verbunden sind, dass durch eine Lastgebevorrichtung der erster Roboterachsschenkel (4) in einer Messlinie (29) wechselseitig mit einer vorgebbaren Kraft beaufschlagbar ist, dass ein durch die Kraftbeaufschlagung bewirkte Auslenkung des ersten Roboterachsschenkels (4) messender Wegsensor (18) in Richtung der Messlinie (29) messend positioniert ist, und dass der Wegsensor (18) in einem vorgegebenen Abstand (26; 42, 44, 52, 56) zur Drehachse (8) des Achsgelenks (2) angeordnet ist.

14. System (64) nach einem der Ansprüche 9 bis 13, **dadurch gekennzeichnet, dass** die gemessenen Werte auf einer Anzeigevorrichtung, insbesondere einem Bildschirm, anzeigbar sind.

15. System (64) nach Anspruch 13 oder 14, **dadurch gekennzeichnet, dass** der Wegsensor (18) mit einem Auswertegerät (96) verbunden ist.

16. System (64) nach einem der Ansprüche 13 bis 15, **dadurch gekennzeichnet, dass** dem Wegsensor (18) und dem Auswertegerät (96) ein Messwandler (36) zwischengeschaltet ist.

17. System (64) nach einem der Ansprüche 9 bis 13, **dadurch gekennzeichnet, dass** das Auswertegerät (96) ein Messcomputer (38) ist und gegebenenfalls eine Anzeigevorrichtung, insbesondere einen Bildschirm, aufweist.

18. System (64) nach einem der Ansprüche 13 bis 17, **dadurch gekennzeichnet, dass** der Wegsensor (18) mittels einer Haltevorrichtung, insbesondere eines Haltestabes (12, 54) oder einer Haltestange, mit einem zweiten Roboterachsschenkel (6) verbunden ist, der zwischen dem Achsgelenk (2) und einem Roboterfuß angeordnet ist.

19. System (64) nach einem der Ansprüche 9 bis 18, **dadurch gekennzeichnet, dass** im Auswertegerät (96) oder / und im Messwandler (36) Computerprogrammprodukte implementiert sind, durch welche die Messung und / oder die Auswertung der Messdaten ermöglicht ist.

Ursache ◇ Wirkung — 15

Prozentuale Bewertung
Drehmoment per
Produktionsprogramm

Getriebespiel / Lagerspiel
Analyse

Nutzenoptimierte
Schmierzyklenprozedur & Analyse der
mechanischen / Kabeleinheiten

7

9

11

Fig. 1

EP 1 607 193 A2

13

Fig. 2

Fig.3

Fig.4

EP 1 607 193 A2

Fig. 5

**Produktion Roboterbewegungsprogramm** — 102, 96

**Motion Distribution** — 98

**Zeitlicher Anteil der Achsen im Produktionszyklus & maximale Bewegung in Grad und Anzahl der mechanischen und Kabeleinheiten** — 100

**COM Server** — 94

TCP/IP Network Service plug — 92

60   62

Fig. 6

| | Revolutions | Index | Stunden per Tag | Stunden per 5 Tage Woche |
|---|---|---|---|---|
| Achse 1 | 43.8 | 18 % | 3.00 | 15.0 |
| Achse 2 | 45.1 | 19 % | 3.16 | 15.8 |
| Achse 3 | 63.7 | 27 % | 4.50 | 22.5 |
| Achse 4 | 19.7 | 08 % | 1.33 | 06.5 |
| Achse 5 | 18.6 | 08 % | 1.33 | 06.5 |
| Achse 6 | 49.0 | 20 % | 3.33 | 16.65 |

112  114  116  118  120

110

Fig. 7